# EUROPÄISCHE PATENTSCHRIFT

(11) **EP 3 383 668 B1**
(45) Veröffentlichungstag und Bekanntmachung des Hinweises auf die Patenterteilung: **20.05.2020**
(21) Anmeldenummer: 16757264.3
(22) Anmeldetag: 29.08.2016
(51) Int. Cl.: B60C 11/00, B60C 13/00, B60C 19/00, B60C 11/04

(54) **FAHRZEUGLUFTREIFEN**
PNEUMATIC TYRES FOR VEHICLES
PNEUMATIQUE DE VÉHICULE

(30) Priorität: 04.12.2015 DE 102015224294
(43) Veröffentlichungstag der Anmeldung: 10.10.2018
(73) Patentinhaber: Continental Reifen Deutschland GmbH, 30165 Hannover (DE)
(72) Erfinder: SCHÜRMANN, Oliver, 30855 Langenhagen (DE)
(74) Vertreter: Finger, Karsten
(86) Internationale Anmeldenummer: PCT/EP2016/070271
(87) Internationale Veröffentlichungsnummer: WO 2017/092892

(56) Entgegenhaltungen:
- EP-A2- 1 798 075
- DE-A1-102009 036 460
- JP-A- 2007 168 541
- US-A1- 2011 220 264

## Beschreibung

Die Erfindung betrifft einen Fahrzeugluftreifen in Radialbauart mit einem profilierten Laufstreifen, Seitenwänden, Wulstbereichen und einer luftdicht ausgeführten Innenschicht, welche die dem Innenraum des Fahrzeugluftreifens zugewandte Innenseite bildet, wobei an der Innenseite der Innenschicht vom Niveau der Innenseite vorstehende Rippen ausgebildet sind, welche durch einen bei der Vulkanisation des Fahrzeugluftreifens in einer Reifenheizform in das Innere des Reifens eingebrachten Heizbalg eingeprägt worden sind und wobei an einem dem Laufstreifen gegenüberliegenden Umfangsbereich der Innenseite der Innenschicht ringförmig umlaufend ein Schallabsorber angebracht ist.

Es ist bekannt, zur Reduktion des im Betrieb bzw. beim Abrollen des Reifens nach außen abgestrahlten und im Fahrzeuginneren entstehenden Geräuschaufkommens einen Schaumstoffring in das Reifeninnere einzubringen. So ist beispielsweise aus der DE 198 06 935 A1 ein Verfahren zum Herstellen eines Fahrzeugluftreifens mit einer an der Innenschicht anhaftenden, schallabsorbierenden Schaumstoffschicht bekannt, wobei der Reifen bereits vor der Vulkanisation mit der Schaumstoffschicht belegt wird und die Schaumstoffschicht während der Vulkanisation mit der Innenschicht auf chemische und/oder mechanische Weise verbunden wird. Bei dem aus der DE 197 50 229 A1 bekannten Fahrzeugluftreifen befindet sich an der Reifeninnenseite eine Schicht aus geschlossenporigem Schaumstoff, die mit der Innenseite durch Kleben verbunden ist.

Ferner ist aus der EP 1 798 075 A2 ein Fahrzeugluftreifen mit einem Schallabsorber bekannt, welcher an einem dem Laufstreifen gegenüberliegenden Umfangsbereich der Innenseite der Innenschicht angebracht ist und in Umfangsrichtung umläuft. An der Innenseite der Innenschicht ist zumindest eine von der Innenschicht abragende Gummirippe ausgebildet, welche sich zumindest abschnittsweise in den Bereich des Schallabsorbers erstreckt, eine Höhe von 0,2 mm bis 1,0 mm, ein Breite von 0,4 mm bis 1,6 mm und eine Querschnittsfläche von 0,08 mm² bis 1,00 mm² aufweist. Diese Maßnahmen sollen einen gut ausformbaren Reifen mit Schallabsorber ermöglichen.

In der Praxis ist es üblich, den Schallabsorber vollflächig mit der Innenseite des Fahrzeugluftreifens zu verkleben, wobei üblicherweise ein Polyurethan-Gel verwendet wird. Bislang wird die Auffassung vertreten, dass nur eine vollflächige Verklebung eine hinreichende Sicherheit gegen ein unerwünschtes, selbsttätiges Ablösen des Schallabsorbers von der Innenseite des Fahrzeugluftreifens gewährleisten kann. Außerdem wurde diese Maßnahme als fertigungstechnisch einfachste Lösung erachtet. Dabei wird die gesamte, dem Laufstreifen gegenüberliegende Innenseite des Fahrzeugluftreifens mit dem Haftmittel bzw. Kleber versehen und anschließend der Schallabsorber an dem für ihn vorgesehenen Umfangsabschnitt an der Innenseite angeklebt. Die bislang übliche vollflächige Verklebung wird zudem aus Sicherheitsgründen unter Verwendung einer relativ dicken Schicht an Haftmittel bzw. Kleber durchgeführt, wodurch das Gewicht des Fahrzeugluftreifens erhöht wird, wobei die benötigte große Menge an Haftmittel wirtschaftlich nachteilig ist.

Der Erfindung liegt die Aufgabe zugrunde, bei einem Fahrzeugluftreifen der eingangs genannten Art die Verklebung zwischen dem Schallabsorber und dem Fahrzeugluftreifen zu optimieren, dabei weiterhin ein sicheres Anhaften des Schallabsorbers zu gewährleisten und gleichzeitig Gewicht zu reduzieren. Die zu treffenden Maßnahmen sollen fertigungstechnisch einfach umsetzbar sein.

Gelöst wird die gestellte Aufgabe erfindungsgemäß dadurch, dass zumindest in einem Teilbereich des dem Laufstreifen gegenüberliegenden Umfangsbereiches der Innenseite der Innenschicht, an welchem der Schallabsorber angebracht wird, vom Heizbalg vom Niveau der Innenseite in die die Innenschicht hinein ragende Rillen ausgebildet worden sind.

In der Reifeninnenschicht sind daher zusätzlich zu den durch den Heizbalg bei der Vulkanisation des Fahrzeugluftreifens ausgebildeten Rippen Rillen eingeprägt. Diese Rillen vergrößern die effektive Kontakt- bzw. Klebefläche zum Anbringen des Schallabsorbers an der Innenseite des Fahrzeugluftreifens. Erfolgt weiterhin eine vollflächige Klebung, wird die Haftung des Schallabsorbers an der Innenseite des Fahrzeugluftreifens verbessert, dabei kann weniger Haftmittel verwendet werden, da eine größere Klebefläche zur Verfügung steht. Je nach Ausführung und Anordnung der Rillen kann zudem auf eine vollflächige Verklebung des Schallabsorbers an der Innenseite des Fahrzeugluftreifens verzichtet werden, es ist möglich, lediglich im Bereich der ausgebildeten Rillen eine Klebung vorzunehmen. So kann einerseits eine Einsparung von teurem Haftmittel erfolgen und darüber hinaus auch eine Reduktion des Gesamtgewichts des Fahrzeugluftreifens erzielt werden. Nachdem die Rillen auf analoge Weise wie die Rippen über den Heizbalg eingeprägt werden, ist die Erfindung fertigungstechnisch einfach zu realisieren.

Bei einer bevorzugten Ausführungsform der Erfindung sind die Rillen in einem mittleren, von Rippen freien Umfangsbereich der Innenseite der Innenschicht ausgebildet. Gerade in diesem Bereich ist der mit den Rillen erzielbare Effekt, nämlich ein Vergrößern der Kontakt- beziehungsweise Klebefläche zum Anbringen des Schallabsorbers, besonders ausgeprägt.

Es kann jedoch auch vorteilhaft sein, gemäß einer weiteren Ausführungsform der Erfindung die Rillen seitlich eines von Rippen freien mittleren Umfangsbereiches der Innenseite der Innenschicht auszubilden. Diese Maßnahme kann zusätzlich oder alternativ getroffen werden und ist vor allem dann vorteilhaft, wenn an der Innenseite ein relativ breiter Schallabsorber angebracht werden soll.

Es gibt eine Vielzahl von Möglichkeiten, Rillen gemäß der Erfindung an der Innenseite des Reifens auszubilden. Besonders vorteilhaft sind jene Ausführungen, welche es ermöglichen, Haftmittel einzusparen und den Schallabsorber trotzdem zuverlässig und dauerhaft mit der Innenseite des Fahrzeugluftreifens zu verbinden. Bei einer dieser Möglichkeiten sind die Rillen zumindest im Wesentlichen parallel zu den Rippen verlaufend ausgebildet. Bei weiteren Ausführungsformen können die Rillen oder Abschnitte von Rillen zwischen Rippen verlaufend ausgebildet sein oder es kann vorgesehen sein, dass Rillen oder Abschnitte von Rillen die Rippen kreuzen.

Bezüglich des Verlaufes beziehungsweise ihrer Erstreckung können die Rillen ebenfalls vielfältig ausgeführt werden. So ist es möglich, Rillen vorzusehen, die in Umfangsrichtung des Reifens verlaufen oder, alternativ, Rillen vorzusehen, die in axialer Richtung verlaufen. Die Rillen können jedoch auch kreisförmig oder auf andere Weise entlang geschlossener Pfade oder bei weiteren Ausführungsvarianten wellen- oder zickzackförmig verlaufen.

Auf besonders zuverlässige und daher auch einfache Weise lassen sich in der Innenschicht des Fahrzeugluftreifens Rillen einprägen, die bestimmte Dimensionen aufweisen. In diesem Zusammenhang ist es günstig, wenn Rillen eingeprägt werden, die an der Innenseite der Innenschicht eine Breite von 2 mm bis 4 mm und einen gegenseitigen Abstand von 2 mm bis 9 mm aufweisen. Die auf das Niveau der Innenseite der Innenschicht bezogene Tiefe der Rillen beträgt vorzugsweise 0,5 mm bis 1 mm.

Besonders einfach ist eine Einprägung von Rillen, die einen runden, beispielsweise halbkreisförmigen, Querschnitt aufweisen.

Weitere Merkmale, Vorteile und Einzelheiten der Erfindung werden nun anhand der schematischen Zeichnung näher erläutert. Dabei zeigen
Fig. 1 einen Querschnitt durch einen Fahrzeugluftreifen,
Fig. 2 eine Ansicht eines Umfangsabschnittes eines Fahrzeugluftreifens mit Sicht auf die Innenseite des Fahrzeugluftreifens und
Fig. 3 und Fig. 4 Draufsichten auf Ausschnitte der Innenseite eines Fahrzeugluftreifens mit unterschiedlichen Ausführungsvarianten der Erfindung.

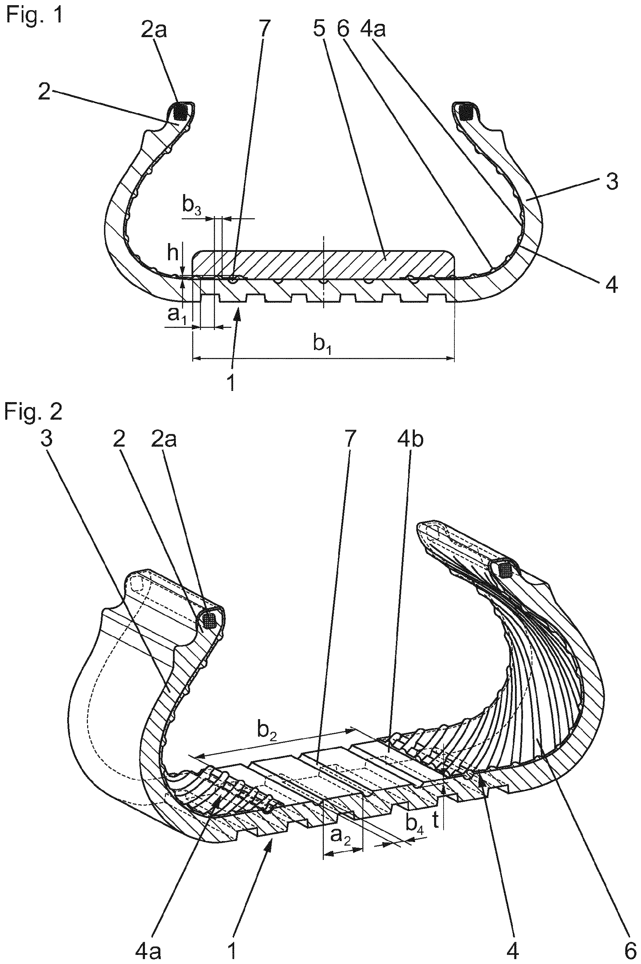

Fig. 1 zeigt schematisch den Querschnitt eines insbesondere für Personenkraftwagen, Vans oder Light Trucks vorgesehenen schlauchlosen Fahrzeugluftreifen in Radialbauart mit einem profilierten Laufstreifen 1, Wulstbereichen 2, in welchen jeweils ein Wulstkern 2a verankert ist, und Seitenwänden 3. Nicht dargestellt sind weitere, den Fahrzeugluftreifen verstärkenden Bauteile, wie eine Radialkarkasse und ein mehrlagiger Gürtel. Der Fahrzeugluftreifen weist eine luftdichte Innenschicht 4 auf, welche die Innenseite 4a des Reifens bedeckt und bildet. Fig. 1 zeigt ferner einen an der Innenseite 4a des Fahrzeugluftreifens ringförmig umlaufenden, mit der Innenseite 4a verbundenen, entweder vollflächig oder partiell angeklebten Schallabsorber 5, welcher vorzugsweise aus einem thermoplastischen oder elastomeren Schaumstoff, insbesondere aus Polyurethanschaum, besteht. Der Schallabsorber 5 weist eine über den Reifenumfang konstante Breite b₁ auf, die zwischen 30% und 100% der Reifenaufstandsfläche beträgt. Die ebenfalls konstante Dicke des Schallabsorbers 5 beträgt zwischen 5% und 20% der Breite b₁ und daher beispielsweise zwischen 20 mm und 50 mm, je nach Reifendimension.

Wie beispielsweise Fig. 2 zeigt, ist an der Innenseite 4a des Reifens eine Vielzahl von parallel zueinander verlaufenden Rippen 6 ausgebildet. Die Rippen 6 werden bei der Vulkanisation des Fahrzeugluftreifens in einer Reifenheizform durch den in den zu vulkanisierenden Reifen eingebrachten und innen mit einem heißen Medium, beispielsweise Heißdampf, beschickten Heizbalg gebildet. An der Außenseite der Heizbälge ist üblicherweise eine Vielzahl von Rillen ausgebildet, um während des Einformens des Heizbalges für ein Ableiten der Luft zwischen dem Heizbalg und dem Rohreifen zu sorgen. Liegt der mit Heizmedium befüllte Heizbalg an der Innenseite des Rohreifens an, prägt er die erwähnten Rippen 6 in die Innenschicht 4 ein. Üblicherweise verlaufen diese Rippen 6 wie in Fig. 2 gezeigt, wobei in einem zentralen Umfangsbereich 4b an der Innenseite 4a meist keine Rippen 6 ausgebildet werden. Dieser Umfangsbereich 4b weist in axialer Richtung meist eine Breite b₂ von 20 mm bis 100 mm auf. An jeder Seite dieses Umfangsbereiches 4b verlaufen die Rippen 6 zwischen dem Rand des Umfangsbereiches 4b bis in den jeweiligen Wulstbereich 2 schräg zur Umfangsrichtung über die Innenseite 4a. An der dem Laufstreifen 1 gegenüberliegenden Bereich der Innenseite 4a schließen die Rippen 6 mit der axialen Richtung beispielsweise einen spitzen Winkel von 30° bis 45° ein. Wie in Fig. 1 gezeigt, weisen die Rippen 6 an ihrer Basis beispielsweise eine Breite b₃ von 2 mm bis 3 mm auf, ihr gegenseitiger Abstand a₁ beträgt üblicherweise 8 mm bis 9 mm, ihre maximale Höhe h insbesondere 0,5 mm bis 1 mm. Die Querschnittsfläche der Rippen 6 ist ferner üblicherweise gerundet, beispielsweise im Wesentlichen halbkreisförmig, kann jedoch auch im Wesentlichen rechteckig sein.

Gemäß der Erfindung werden nun zumindest in einem Teilbereich des mit dem Schallabsorber 5 in Kontakt kommenden Bereiches der Innenseite 4a der Innenschicht 4 zusätzlich zu den Rippen 6 durch den Heizbalg Rillen 7 eingeprägt. Die Rillen 7 werden daher durch entsprechende Erhebungen an der Außenseite des Heizbalges erzeugt und befinden sich vorzugsweise höchstens in jenem Innenschichtbereich, an welchem das Anbringen des Schallabsorbers 5 vorgesehen ist. Wie Fig. 2 zeigt, weisen die Rillen 7 an der Innenseite 4a der Innenschicht 4 eine Breite b₄ von insbesondere 2 mm bis 4 mm auf, ihre Tiefe t beträgt vorzugsweise 0,5 mm bis 1 mm, ihr gegenseitiger Abstand a₂ an der Innenseite 4a insbesondere 2 mm bis 9 mm. Im Querschnitt sind sie insbesondere trogartig, daher beispielsweise halbkreisförmig gerundet, ausgeführt, können jedoch auch zu ihrer tiefsten Stelle spitz zusammenlaufende Rillenwände aufweisen oder von insgesamt im Wesentlichen rechteckförmig verlaufenden Rillenwänden begrenzt sein. Bei der in Fig. 1 und Fig. 2 gezeigten Ausführung verlaufen die Rillen 7 in Umfangsrichtung, parallel zueinander und im mittleren Umfangsbereich 4b, wobei jeweils eine Rille 7 seitlich des Umfangsbereiches 4b verläuft und Rippen 6 kreuzt.

Bei einer möglichen Ausführungsvariante der Erfindung sind lediglich im mittleren, von Rippen 6 freien Umfangsbereich 4b der Innenseite 4a Rillen 7 ausgebildet. Grundsätzlich können die Rillen 7 auch in axialer Richtung oder schräg bzw. diagonal zur Umfangsrichtung des Reifens verlaufen, wobei ihre Orientierung mit jener der Rippen 6 übereinstimmen kann und in diesem Fall die Rillen 7 zwischen den Rippen 6 verlaufen. Bei weiteren Ausführungsvarianten der Erfindung verlaufen die Rillen 7 wellen- oder zickzackförmig in beliebiger Richtung oder entlang von Kreisen oder anderen in sich geschlossenen Pfaden. Des Weiteren ist eine Ausführungsvariante möglich, bei welcher die Rillen 7 lediglich seitlich des von Rippen 6 freien Umfangsbereiches ausgebildet sind.

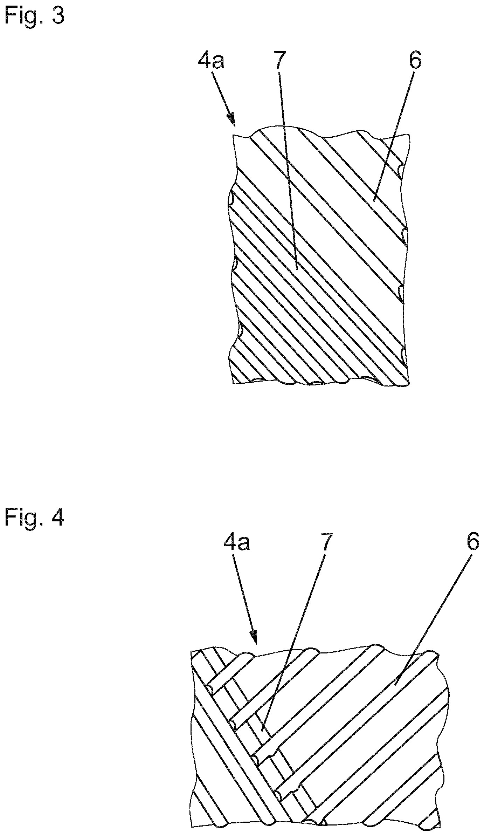

Fig. 3 zeigt einen Ausschnitt der Innenseite 4a mit Rillen 7, die zwischen und parallel zu den Rippen 6 verlaufen. Bei dem in Fig. 4 gezeigten Ausschnitt kreuzen parallel zueinander verlaufende Rillen 7 die Rippen 6.

Wie erwähnt, gibt es eine Vielzahl weiterer, nicht dargestellter Möglichkeiten, Rillen 7 in jenem Bereich auszubilden, an welchem der Schallabsorber 5 angebracht wird. Nachdem die Rillen 7 die Klebefläche zum Schallabsorber 5 bei gleich großer projizierter Fläche erhöhen, kann einerseits zur Erzielung einer zumindest im Wesentlichen gleich guten Klebekraft die Dicke der Klebeschicht herabgesetzt werden, wodurch sich eine Einsparung an Material, Gewicht und auch Kosten ergibt. Die Erfindung eröffnet auch die Möglichkeit, den Schallabsorber 5 partiell und vor allem in jenen Bereichen, wo gezielt Rillen 7 ausgebildet sind, anzukleben. Auch durch diese Maßnahme ist eine Einsparung an Gewicht, Material und Kosten möglich.

### Bezugsziffernliste

- 1: Laufstreifen
- 2: Wulstbereich
- 2a: Wulstkern
- 3: Seitenwand
- 4: Innenschicht
- 4a: Innenseite
- 4b: Umfangsbereich
- 5: Schallabsorber
- 6: Rippen
- 7: Rillen
- a₁, a₂: Abstand
- b₁, b₂, b₃, b₄: Breite
- h: Höhe
- t: Tiefe

## Patentansprüche

1. Fahrzeugluftreifen in Radialbauart mit einem profilierten Laufstreifen (1), Seitenwänden (3), Wulstbereichen (2) und einer luftdicht ausgeführten Innenschicht (4), welche die dem Innenraum des Fahrzeugluftreifens zugewandte Innenseite (4a) bildet, wobei an der Innenseite (4a) der Innenschicht (4) vom Niveau der Innenseite (4a) vorstehende Rippen (6) ausgebildet sind, welche durch einen bei der Vulkanisation des Fahrzeugluftreifens in einer Reifenheizform in das Innere des Reifens eingebrachten Heizbalg eingeprägt worden sind und wobei an einem dem Laufstreifen (1) gegenüberliegenden Umfangsbereich (4b) der Innenseite (4a) der Innenschicht (4) ringförmig umlaufend ein Schallabsorber (5) angebracht ist, **dadurch gekennzeichnet,**
**dass** zumindest in einem Teilbereich des dem Laufstreifen (1) gegenüberliegenden Umfangsbereiches (4b) der Innenseite (4a) der Innenschicht (4), an welchem der Schallabsorber (5) angebracht wird, vom Heizbalg vom Niveau der Innenseite in die Innenschicht hineinragende Rillen (7) ausgebildet worden sind.

2. Fahrzeugluftreifen nach Anspruch 1, **dadurch gekennzeichnet, dass** die Rillen (7) in einem mittleren, von Rippen (6) freien Umfangsbereich (4b) an der Innenseite (4a) der Innenschicht (4) ausgebildet sind.

3. Fahrzeugluftreifen nach Anspruch 1 oder 2, **dadurch gekennzeichnet, dass** die Rillen (7) seitlich eines von Rippen (6) freien mittleren Umfangsbereiches (4b) an der Innenseite (4a) der Innenschicht (4) ausgebildet sind.

4. Fahrzeugluftreifen nach einem der Ansprüche 1 bis 3, **dadurch gekennzeichnet, dass** die Rillen (7) zumindest im Wesentlichen parallel zu den Rippen (6) verlaufend ausgebildet sind.

5. Fahrzeugluftreifen nach Anspruch 4, **dadurch gekennzeichnet, dass** die Rillen (7) oder Abschnitte von Rillen (7) zwischen Rippen (6) verlaufend ausgebildet sind.

6. Fahrzeugluftreifen nach einem der Ansprüche 1 bis 3, **dadurch gekennzeichnet, dass** Rillen (7) oder Abschnitte von Rillen (7) Rippen (6) kreuzen.

7. Fahrzeugluftreifen nach einem der Ansprüche 1 bis 3, **dadurch gekennzeichnet, dass** Rillen (7) vorgesehen sind, die in Umfangsrichtung des Reifens verlaufen.

8. Fahrzeugluftreifen nach einem der Ansprüche 1 bis 3, **dadurch gekennzeichnet, dass** Rillen (7) vorgesehen sind, die in axialer Richtung verlaufen.

9. Fahrzeugluftreifen nach einem der Ansprüche 1 bis 3, **dadurch gekennzeichnet, dass** Rillen (7) vorgesehen sind, die kreisförmig oder auf andere Weise entlang geschlossener Pfade verlaufen.

10. Fahrzeugluftreifen nach einem der Ansprüche 1 bis 3, **dadurch gekennzeichnet, dass** Rillen (7) vorgesehen sind, die wellen- oder zickzackförmig verlaufen.

11. Fahrzeugluftreifen nach einem der Ansprüche 1 bis 10, **dadurch gekennzeichnet, dass** die Rillen (7) an der Innenseite (4a) der Innenschicht (4) eine Breite (b₄) von 2 mm bis 4 mm aufweisen.

12. Fahrzeugluftreifen nach einem der Ansprüche 1 bis 11, **dadurch gekennzeichnet, dass** die Rillen (7) an der Innenseite (4a) der Innenschicht (4) einen gegenseitigen Abstand (a₂) von 2 mm bis 9 mm aufweisen.

13. Fahrzeugluftreifen nach einem der Ansprüche 1 bis 12, **dadurch gekennzeichnet, dass** die Rillen (7), bezogen auf das Niveau der Innenseite (4a) der Innenschicht (4), eine Tiefe (t)von 0,5 mm bis 1 mm aufweisen.

14. Fahrzeugluftreifen nach einem der Ansprüche 1 bis 13, **dadurch gekennzeichnet, dass** die Rillen (7) einen runden, beispielsweise halbkreisförmigen Querschnitt aufweisen.

## Claims

1. Pneumatic vehicle tyre of radial design with a profiled tread strip (1), side walls (3), bead regions (2) and an inner layer (4) of air-tight configuration which forms the inner side (4a) which faces the interior space of the pneumatic vehicle tyre, ribs (6) which project from the level of the inner side (4a) being configured on the inner side (4a) of the inner layer (4), which ribs (6) have been shaped by way of a heating bladder which is introduced into the interior of the tyre during the vulcanization of the pneumatic vehicle tyre in a tyre heating mould, and a sound absorber (5) being attached so as to run around in an annular manner on a circumferential region (4b) of the inner side (4a) of the inner layer (4), which circumferential region (4b) lies opposite the tread strip (1), **characterized in that** grooves (7) which protrude from the level of the inner side into the inner layer have been configured by the heating bladder at least in a part region of that circumferential region (4b) of the inner side (4a) of the inner layer (4) which lies opposite the tread strip (1) and to which the sound absorber (5) is attached.

2. Pneumatic vehicle tyre according to Claim 1, **characterized in that** the grooves (7) are configured on the inner side (4a) of the inner layer (4) in a central circumferential region (4b) which is free from ribs (6).

3. Pneumatic vehicle tyre according to Claim 1 or 2, **characterized in that** the grooves (7) are configured on the inner side (4a) of the inner layer (4) laterally of a central circumferential region (4b) which is free from ribs (6).

4. Pneumatic vehicle tyre according to one of Claims 1 to 3, **characterized in that** the grooves (7) are configured so as to run at least substantially parallel to the ribs (6).

5. Pneumatic vehicle tyre according to Claim 4, **characterized in that** the grooves (7) or sections of grooves (7) are configured so as to run between ribs (6).

6. Pneumatic vehicle tyre according to one of Claims 1 to 3, **characterized in that** grooves (7) or sections of grooves (7) cross ribs (6).

7. Pneumatic vehicle tyre according to one of Claims 1 to 3, **characterized in that** grooves (7) are provided which run in the circumferential direction of the tyre.

8. Pneumatic vehicle tyre according to one of Claims 1 to 3, **characterized in that** grooves (7) are provided which run in the axial direction.

9. Pneumatic vehicle tyre according to one of Claims 1 to 3, **characterized in that** grooves (7) are provided which run in a circular manner or in another way along closed paths.

10. Pneumatic vehicle tyre according to one of Claims 1 to 3, **characterized in that** grooves (7) are provided which run in a wave-shaped or zigzag-shaped manner.

11. Pneumatic vehicle tyre according to one of Claims 1 to 10, **characterized in that** the grooves (7) have a width (b₄) of from 2 mm to 4 mm on the inner side (4a) of the inner layer (4).

12. Pneumatic vehicle tyre according to one of Claims 1 to 11, **characterized in that** the grooves (7) have a mutual spacing (a₂) of from 2 mm to 9 mm on the inner side (4a) of the inner layer (4).

13. Pneumatic vehicle tyre according to one of Claims 1 to 12, **characterized in that** the grooves (7) have a depth (t) of from 0.5 mm to 1 mm, in relation to the level of the inner side (4a) of the inner layer (4).

14. Pneumatic vehicle tyre according to one of Claims 1 to 13, **characterized in that** the grooves (7) have a round, for example semi-circular, cross section.

## Revendications

1. Pneumatique de véhicule de construction radiale, comprenant une bande de roulement profilée (1), des parois latérales (3), des régions de talon (2) et une couche intérieure (4) réalisée de manière étanche à l'air, qui forme le côté intérieur (4a) tourné vers l'espace interne du pneumatique de véhicule, des nervures (6) saillant depuis le niveau du côté intérieur (4a) étant réalisées au niveau du côté intérieur (4a) de la couche intérieure (4), lesquelles ont été formées par impression par un soufflet chauffant introduit à l'intérieur du pneu lors de la vulcanisation du pneumatique de véhicule dans un moule de chauffage de pneu, et un atténuateur de son (5) étant monté sur la périphérie sous forme annulaire au niveau d'une région périphérique (4b) du côté intérieur (4a) de la couche intérieure (4), opposée à la bande de roulement (1),
**caractérisé en ce**
**qu'**au moins dans une région partielle de la région périphérique (4b) du côté intérieur (4a) de la couche intérieure (4) opposée à la bande de roulement (1), au niveau de laquelle est monté l'atténuateur de son (5), des rainures (7) pénétrant dans la couche intérieure ont été réalisées par le soufflet chauffant à partir du niveau du côté intérieur.

2. Pneumatique de véhicule selon la revendication 1, **caractérisé en ce que** les rainures (7) sont réalisées dans une région périphérique (4b) exempte de nervures (6) au niveau du côté intérieur (4a) de la couche intérieure (4).

3. Pneumatique de véhicule selon la revendication 1 ou 2, **caractérisé en ce que** les rainures (7) sont réalisées latéralement par rapport à une région périphérique (4b) centrale exempte de rainures (6) au niveau du côté intérieur (4a) de la couche intérieure (4).

4. Pneumatique de véhicule selon l'une quelconque des revendications 1 à 3, **caractérisé en ce que** les rainures (7) sont réalisées de manière à s'étendre au moins essentiellement parallèlement aux nervures (6).

5. Pneumatique de véhicule selon la revendication 4, **caractérisé en ce que** les rainures (7) ou des portions de rainures (7) sont réalisées de manière à s'étendre entre les nervures (6).

6. Pneumatique de véhicule selon l'une quelconque des revendications 1 à 3, **caractérisé en ce que** des rainures (7) ou des portions de rainures (7) croisent des nervures (6)

7. Pneumatique de véhicule selon l'une quelconque des revendications 1 à 3, **caractérisé en ce que** des rainures (7) qui s'étendent dans la direction périphérique du pneu sont prévues.

8. Pneumatique de véhicule selon l'une quelconque des revendications 1 à 3, **caractérisé en ce que** des rainures (7) qui s'étendent dans la direction axiale sont prévues.

9. Pneumatique de véhicule selon l'une quelconque des revendications 1 à 3, **caractérisé en ce que** des rainures (7) qui s'étendent sous forme circulaire ou d'une autre manière le long de chemins fermés sont prévues.

10. Pneumatique de véhicule selon l'une quelconque des revendications 1 à 3, **caractérisé en ce que** des rainures (7) qui s'étendent sous forme ondulée et/ou en zigzag sont prévues.

11. Pneumatique de véhicule selon l'une quelconque des revendications 1 à 10, **caractérisé en ce que** les rainures (7) présentent, au niveau du côté intérieur (4a) de la couche intérieure (4), une largeur (b₄) de 2 mm à 4 mm.

12. Pneumatique de véhicule selon l'une quelconque des revendications 1 à 11, **caractérisé en ce que** les rainures (7) présentent au niveau du côté intérieur (4a) de la couche intérieure (4) un espacement mutuel (a₂) de 2 mm à 9 mm.

13. Pneumatique de véhicule selon l'une quelconque des revendications 1 à 12, **caractérisé en ce que** les rainures (7) présentent, par rapport au niveau du côté intérieur (4a) de la couche intérieure (4), une profondeur (t) de 0,5 mm à 1 mm.

14. Pneumatique de véhicule selon l'une quelconque des revendications 1 à 13, **caractérisé en ce que** les rainures (7) présentent une section transversale ronde, par exemple en forme de demi-cercle.
